(19) Europäisches Patentamt
European Patent Office
Office européen des brevets

(11) Publication number: **0 287 306 B1**

(12) **EUROPEAN PATENT SPECIFICATION**

(45) Date of publication of patent specification: **20.01.93**

(51) Int. Cl.5: **C09J 133/10**, C09J 7/02, C08F 220/18

(21) Application number: **88303227.8**

(22) Date of filing: **11.04.88**

(54) **Removable pressure-sensitive adhesive tape.**

(30) Priority: **15.04.87 US 36550**

(43) Date of publication of application:
**19.10.88 Bulletin 88/42**

(45) Publication of the grant of the patent:
**20.01.93 Bulletin 93/03**

(84) Designated Contracting States:
**DE ES FR GB IT SE**

(56) References cited:
**US-A- 4 629 663**
**US-A- 4 645 711**

**DERWENT ACCESSION NO. 85-131 021, Ouestel Tele- systems (WPIL) DERWENT PUBLICATIONS LTD., London**

(73) Proprietor: **MINNESOTA MINING AND MANUFACTURING COMPANY**
**3M Center, P.O. Box 33427**
**St. Paul, Minnesota 55133-3427(US)**

(72) Inventor: **Winslow, Louis E. c/o Minnesota Mining and**
**Manufacturing Company 2501 Hudson Road**
**P.O. Box 33427 St. Paul Minnesota 55133(US)**

(74) Representative: **Baillie, Iain Cameron et al**
**c/o Ladas & Parry, Altheimer Eck 2**
**W-8000 München 2(DE)**

**EP 0 287 306 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

### Background of the Invention

### Field of the Invention

The invention concerns novel fast-drying pressure-sensitive adhesives having excellent cohesive strength and improved peel resistance. The invention also concerns pressure-sensitive adhesive tapes which usually are slit to narrow widths and then wound upon themselves for storage and shipment. Such tapes are originally produced in wide widths, and the term "tape" encompasses such wide widths. The invention specifically concerns removable pressure-sensitive adhesive tapes such as masking tapes, weatherstripping tapes, label tapes, and protective plating tapes.

### Description of the Related Art

As is pointed out in United States Patent No. 4,629,663 (Brown et al.), the manufacture of pressure-sensitive adhesive tapes is being shifted from organic solvent systems to aqueous latices in order to reduce air pollution and fire hazard and also to eliminate the rising expense of organic solvents. Surfactants, wetting agents, or emulsifying agents are commonly used to protect the aqueous latex from coagulation. Among patents cited in the Brown patent to illustrate this is U.S. Patent No. 3,770,708 (Knoepfel et al.) which discloses a pressure-sensitive adhesive tape, the adhesive layer of which is a copolymer of vinyl monomers such as a non-tertiary alkyl acrylate and zwitterionic monomer which in part serves as an emulsifying agent that is bound to the polymer, such an emulsifying agent being called an "emulsifier monomer". All of the Knoepfel working examples also employ conventional emulsifying agents which do not become bound to the polymer and are called "external emulsifiers".

The pressure-sensitive adhesive tape of United States Patent No. 3,922,464 (Silver et al. ) is similar to that of the Knoepfel patent except in these respects: (1) it is removable, (2) from 0.2 to 5% by weight of at least one vinyl-unsaturated, homopolymerizable emulsifier monomer is copolymerized with the Knoepfel monomers, and (3) the zwitterionic monomer can be omitted. The Silver adhesives also preferably employ "small amounts of external emulsifier, especially where short chain emulsifier monomers are used. Such emulsifiers, which are commonly employed in the preparation of many copolymer latices, assist in initial suspension of the monomeric reactants and tend to result in a more homogeneous appearing emulsion than when they are omitted. On the other hand, excessive amounts of such external emulsifiers tend to ... make the emulsion more difficult to dry" (col. 8, lines 39-55).

Both the Silver patent and the above-cited Brown patent specifically concern pressure-sensitive adhesive tapes that are removable for uses such as automotive masking which require clean removability after baking, e.g., of automotive paint for one hour at 120°C. The pressure-sensitive adhesive tape of the Brown patent, approximately like that of Silver, is a copolymer of monomers comprising

(a) from 95 to 99.8 parts by weight of at least one terminally unsaturated vinyl monomer, 60 to 100 weight percent of said vinyl monomer being selected from the class of nontertiary alkyl acrylates wherein each alkyl group has at least half of its carbon atoms in a single chain and the average length of the alkyl chain is at least 4 and not more than 12, and

(b) from 0.2 to 5 parts by weight of at least one vinyl-unsaturated, homopolymerizable emulsifier monomer which is a surfactant having both a hydrophobic and a hydrophilic moiety, contains at least 5 but not more than 40 carbon atoms, and is water-dispersible,

the total parts by weight of (a) plus (b) being 100, and said adhesive layer preferably contains a small amount of an external emulsifier.

The Brown patent says that its adhesive "differs from that of the Silver patent in that the emulsifier monomer comprises a monovalent salt of a styrene sulfonate. As compared to emulsifier monomers named in the Silver patent, a monovalent salt of styrene sulfonate more reliably produces coagulum-free latices, both the latices and polymers produced therefrom tend to have greater hydrolytic stability, and latices of higher solids can be obtained which are easier to coat" (Col. 3, lines 16-24).

U.S. Patent No. 4,645,711 (Winslow et al.) concerns what was "believed to be the first nonstaining automotive masking tape that reliably resists typical lifting forces at 150°C from automotive paint and yet can reliably be stripped off cleanly from automotive paint after one hour at 150°C ... By 'typical lifting forces' are meant those simulated in the 'Curved Panel Lifting Test at 150°'" (col. 3, lines 3-10) described both in the Winslow patent and hereinbelow. The Winslow tape uses the same copolymer as in the Silver patent but differs "in that its layer of pressure-sensitive adhesive comprises from 5 to 50% by weight of" at

least one of four classes of tackifier resins. After noting the Silver patent teaching that small amounts of external emulsifiers assist in initial suspension of the monomeric reactants, the Winslow patent prefers using at least 0.05 weight percent of external emulsifier for the same reason (col. 4, lines 31-42).

The backing of each pressure-sensitive adhesive tape of the working examples of the Brown and the Winslow patents is polyester film. When a paper backing has been substituted for the polyester film and the amount of the emulsifier monomer has been within the preferred range of the Brown patent (0.5 to 2 weight percent), it has been necessary to use very low heat in drying the adhesive coating to avoid bubbling of the adhesive layer. This slows the coating process to the point that it is not commercially feasible to use a paper backing for making the preferred tapes of either the Brown or the Winslow patent. While the adhesive coating could be dried more quickly at reduced amounts of the emulsifier monomer, such reduced amounts would result in undesirably reduced cohesive strengths.

Other Related Art

Because it concerns removable pressure-sensitive adhesive tape having a chemically similar monomer to the adhesive of the present invention, and it employs emulsifiers which are useful in the present invention, attention is directed to Japanese Patent Application JA60-67579 (Asami et al.) which was laid open April 17, 1985. The pressure-sensitive adhesive tape of the Japanese application employs a polymer having substantially the same vinyl monomer (a) as that of the Brown patent (as outlined above). However, the polymer does not employ the emulsifier monomer (b), or any other "emulsifier monomer". After polymerizing the vinyl monomer (a), there is added a phosphate emulsifier such as a polyoxyethylene phosphate having the formula below wherein $R_1$ indicates an alkyl group, alkenyl group, alkyl phenyl group or phenyl group and $R_2$ indicates hydrogen or an alkyl group, alkenyl group, alkyl phenyl group or phenyl group, each group having more than four carbons, and n and m indicate positive integers.

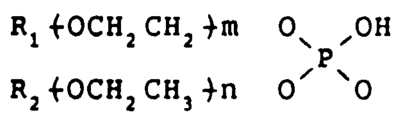

The phosphate emulsifier can also be a salt of the polyoxyethylene phosphate.

The Japanese application indicates that in the absence of the phosphate emulsifier, a tape having a layer of the polymer cannot withstand high temperature (120°C to 160°C) during bake drying whereas inclusion of the phosphate emulsifier in the adhesive layer enables a tape to be cleanly peeled away after bake drying, presumably after being used to mask a bakable paint. Table 1 of the Japanese application compares three tapes of its invention to three tapes which are identical except for omission of the phosphate emulsifier. Two sets of the tapes were coated from organic solvent, but Example 3 and Comparative Example 3 are of interest, being coated from water. The tape of Comparative Example 3 had reasonably good adhesion (260 g/10 mm), but the adhesion of the tape of Example 3 was so low (90 g/10 mm) that it would not meet any automotive specification of which we are aware.

Summary of the Invention

The invention provides a novel fast-drying pressure-sensitive adhesive having excellent cohesive strength and improved peel resistance. The invention also provides a removable pressure-sensitive adhesive tape that combines the excellent adhesive performance of preferred tapes of the Silver and Brown patents with a pressure-sensitive adhesive layer that can be dried much faster. Thus, tapes of the invention can be produced more economically. Further, unlike tapes of the prior art, there is no adhesive bubbling problem at commercially useful production rates when using a paper backing.

Removable pressure-sensitive adhesives of the invention comprise a copolymer of monomers comprising

(a) from 95 to 99.9 parts by weight of at least one terminally unsaturated vinyl monomer, 60 to 100 weight percent of said vinyl monomer being selected from the class of nontertiary alkyl acrylates wherein each alkyl group has at least half of its carbon atoms in a single chain and the average length of the alkyl chain is at least 4 and not more than 12, and

(b) from 0.1 to 5 parts by weight of at least one vinyl-unsaturated homopolymerizable emulsifier monomer which is a surfactant having both a hydrophobic and a hydrophilic moiety, contains at least 5

but not more than 40 carbon atoms, and is water-dispersible,
the total parts by weight of (a) plus (b) being 100.

The adhesive layer of the novel tape differs from that of the Brown patent in that it contains at least 0.2 part by weight of polyoxyethylene phosphate and/or salts thereof, such phosphate and its salts being here sometimes called "phosphate emulsifier". Useful phosphate emulsifiers include those of the general formula

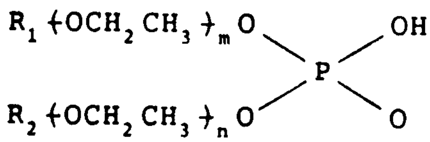

wherein $R_1$ and $R_2$ may be hydrogen, an alkyl group, alkenyl group, phenyl group or an alkyl phenyl group. Preferably emulsifier monomers are selected from at least one of

(i) polyoxyethylene phosphate having the formula

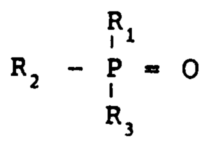

wherein

at least one of $R_1$, $R_2$ and $R_3$ is $R-O-(-CH_2CH_2O)_n-$ and the others are -OH; R is selected from alkyl, alkenyl, aryl, and alkylaryl; and n is a positive integer; and

(ii) a salt of (i).

Preferred salts are sodium, potassium, lithium, and t-amine salts.

The phosphate emulsifier can be added either prior to polymerization or to a latex of a copolymer of the above monomers (a) and (b). Better adhesion can be expected when the phosphate emulsifier has been added to the monomer mixture prior to polymerization. Whether or not the phosphate emulsifier is added prior to polymerization, the adhesive layer of the novel tape preferably includes another external emulsifier such as sodium dodecylbenzene sulfonate.

The preferred amount of phosphate emulsifier depends upon the amount of emulsifier monomer (b) used in making the adhesive copolymer and, to a lesser extent, upon the amount of other external emulsifier. At only 0.1 part by weight of emulsifier monomer (b), an adhesive layer will dry quickly without any phosphate emulsifier, but it may be difficult at such a low proportion of emulsifier monomer (b) to attain a latex which is free from coagulum. Higher amounts of emulsifier (b) not only reduce the likelihood of coagulation but also tend to result in better cohesion, especially at paint-baking temperatures. To ensure against coagulation, the amount of emulsifier monomer (b) is preferably at least 0.5 part by weight. At this level of emulsifier monomer (b), about 0.5 part by weight of the phosphate emulsifier should provide quick drying.

Increased amounts of the phosphate emulsifier above 0.5 part by weight, tend to provide both quicker drying and greater resistance to lifting forces at elevated temperatures as indicated by higher values in the "Curved Panel Lifting Test at 150°C." When the amount of emulsifier monomer (b) is about 0.5 part by weight, minimal further improvement is achieved at levels above about 2 parts by weight of the phosphate emulsifier. When the amount of emulsifier monomer (b) is about 2 parts by weight, faster drying and better resistance to lifting forces may be realized at increased phosphate emulsifier levels up to about 4 parts by weight. When the level of phosphate emulsifier has been increased to 8 parts by weight, there has been a problem with adhesive residue after the "Curved Panel Lifting Test at 150°C."

For reasons taught in the Brown patent, the emulsifier monomer (b) preferably is a monovalent salt of a styrene sulfonate and its amount is from 0.5 to 2.0 parts by weight of (a) plus (b). A preferred salt is sodium styrene sulfonate.

Quick Dry Test (% Water Loss)

A 1-g sample of a latex is poured into a metal cup having a surface area of 13.7 $cm^2$ and immediately covered. After weighing, the cup is uncovered and placed in an air-circulating oven at 200°F (93.3°C) for

20 minutes, removed, recovered, and reweighed. A value of at least 87% water loss indicates that the latex is quick drying and should be useful for coating typical paper backings at commercially useful rates.

Before carrying out the following tests, the tape should be held at 22°C and 50% relative humidity for at least 24 hours and preferably more than 48 hours.

## Curved Panel Lifting Test at 150°C

Used in this test is an aluminum panel having a radius of curvature of 23 cm and a length of 35.5 cm in the curved direction. An automotive paint covers the convex surface of the panel. In order to provide a rigorous test, the paint preferably is one to which masking tapes are difficultly adherent, e.g., an automotive basecoat/clearcoat (BC/CC) acrylic enamel paint system or the automotive "5OJ" acrylic enamel paint of Ford Motor Co.

Tapes to be tested have a backing sheet commonly used in masking tapes, namely a creped paper having at basis weight of 30 lbs. per papermaker's ream (about 50 $g/m^2$) and saturated with a polyurethane. A latex of the pressure-sensitive adhesive to be evaluated is knife-coated onto one face of the backing sheet using a 0.1 mm orifice, allowed to dry at room temperature for about 10 minutes, and then dried in an oven for about 5 minutes at 95°C. The resulting tapes are cut to 1 x 14 inches (2.54 x 35 cm). A 2 x 12 inches (5.08 x 30 cm) strip of nonadhesive masking paper (such as is used for automotive paint aprons) is applied to cover 0.5 inch (1.27 cm) of the adhesive layer except for one inch (2.5 cm) at each end of the tape. This assembly is hand applied to the aluminum panel in its curved direction using the uncovered 0.5 inch (1.27 cm) of the adhesive layer to adhere it to the painted surface.

The assembly-bearing panel is then put into an air-circulating oven at 150°C for 10 minutes, allowed to cool, and then examined for failure. A rating of "0" means no lifting has occurred. Any lifting at either end of the strip is indicated as the cumulative length of lifting at both ends of the strip. While 0 lifting is most preferable, lifting of up to 0.63 cm is considered acceptable performance; lifting of up to 1.3 cm is considered marginally acceptable.

After cooling to room temperature and examined for lifting, the apron is employed to strip the tape quickly, and the panel is then examined for adhesive residue.

## Peel Adhesion Test

A test strip 2.54 cm wide is slit and then adhered to a glass plate mounted on a cart whose speed, when activated, is 2.8 cm/sec. The strip is rolled down with a 2-kg roller. A hook which is attached to a scale by a wire is then attached to the leading edge of the 2.54 cm test strip. The cart is then activated and the test strip is removed at an angle of 180° from the glass plate. The average removal force is noted in N/dm.

The following examples employ the following external emulsifiers:

A = sodium dodecyl benzene sulfonate ("Siponate" DS10, Alcolak, Inc.)
B = sodium alkylaryl polyethoxy sulfonate ("Triton" X-200, Rohm & Haas)
C = monosodium-n-lauryl-$\beta$-iminodipropionic acid ("Deriphat" 160C, Henkel)
D = potassium alkylaryl polyethoxy phosphate ("Triton" QS-44K, Rohm & Haas)
E = potassium alkylaryl polyethoxy phosphate ("Crafol" AP50, Pulcra S.A.)
F = potassium alkylaryl polyethoxy phosphate ("Servoxyl" VPNZ 10/100, Servo)
G = potassium alkylethoxy phosphate ("Crafol" AP60, Pulcra SA)
H = potassium alkyl phosphate ("Servoxyl" VPTZ, Servo)
I = potassium alkyl polyethoxy phosphate ("EAK" 8190, Rewo Chemical Group)
J = potassium alkyl phosphate, ("Berol" 522, Berol Kemi A.B.)

Of the above external emulsifiers, those that are phosphate emulsifiers are believed to have formulae as follows:

## Phosphate Emulsifiers

D

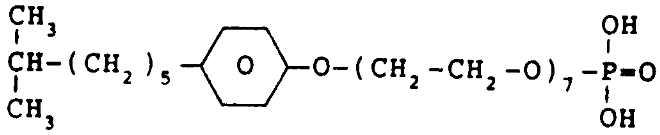

E

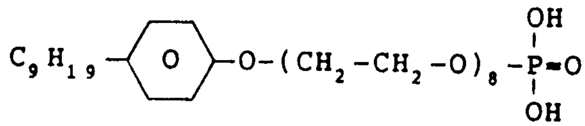

F

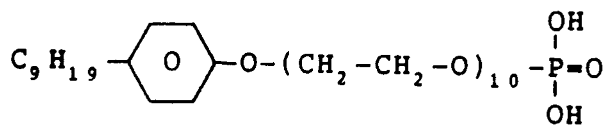

G

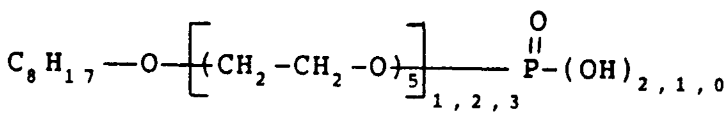

H

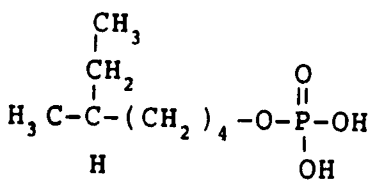

I

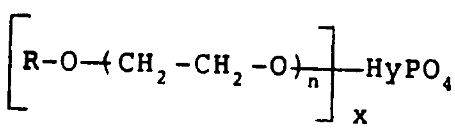

J

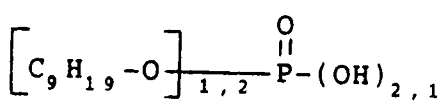

Pressure-Sensitive Adhesive (PSA) Tape 1

To a two-speed Waring blender, the following components were charged (after dissolving the OAA in the IOA):

| Component | Grams | Monomer Ratio |
|---|---|---|
| isooctyl acrylate (IOA) | 130.5 | 87 |
| n-octyl acrylamide (OAA) | 18.0 | 12 |
| sodium styrene sulfonate (NaSS) | 1.5 | 1 |
| external Emulsifier A (in a 10% water solution) | 3.0 | |
| sodium bicarbonate ($NaHCO_3$) | 0.75 | |
| deionized water | 182.1 | |

These components were emulsified by running the blender for one minute on slow speed. The emulsion was then poured into a 0.47-liter (16-oz), small-necked amber bottle. To the emulsion in the bottle, 0.15 g potassium persulfate were added, and the bottle was purged for ten minutes with argon. The bottle was then sealed and placed in a "Launderometer" polymerization bath at 50 °C for 16 hours. After this time the bottle was removed, the latex filtered, and saved for evaluation.

A paper-backed pressure-sensitive adhesive tape was made as described in the Curved Panel Lifting Test at 150 °C and was tested on "50J" acrylic enamel paint system and on "BC/CC" basecoat/clearcoat acrylic enamel paint system. Test results are reported in Table I together with results of testing a series of tapes which were prepared in the same way as was PSA Tape 1 except as indicated below.

| PSA Tape | Monomers | Ratio | External Emulsifier Type | External Emulsifier Level(phr) |
|---|---|---|---|---|
| * 1 | IOA-OAA-NaSS | 87:12:1 | A | 0.2 |
| * 2 | IOA-OAA-NaSS | 87:12:1 | A | 0.4 |
| * 3 | IOA-OAA-NaSS | 87:12:1 | A | 0.6 |
| * 4 | IOA-OAA-NaSS | 87:12:1 | A | 0.8 |
| * 5 | IOA-OAA-NaSS | 87:12:1 | A | 1.0 |
| * 6 | IOA-OAA-NaSS | 87:12:1 | A | 1.2 |
| * 7 | IOA-OAA-NaSS | 87:12:1 | A | 1.4 |
| * 8 | IOA-OAA-NaSS | 87:12:1 | A | 1.6 |
| * 9 | IOA-OAA-NaSS | 87:12:1 | B | 0.2 |
| *10 | IOA-OAA-NaSS | 87:12:1 | B | 0.4 |
| *11 | IOA-OAA-NaSS | 87:12:1 | B | 0.6 |
| *12 | IOA-OAA-NaSS | 87:12:1 | B | 0.8 |
| *13 | IOA-OAA-NaSS | 87:12:1 | B | 1.0 |
| *14 | IOA-OAA-NaSS | 87:12:1 | B | 1.2 |
| *15 | IOA-OAA-NaSS | 87:12:1 | B | 1.4 |
| *16 | IOA-OAA-NaSS | 87:12:1 | B | 1.6 |
| *17 | IOA-OAA-NaSS | 87:12:1 | C | 0.2 |
| *18 | IOA-OAA-NaSS | 87:12:1 | C | 0.4 |
| *19 | IOA-OAA-NaSS | 87:12:1 | C | 0.6 |
| *20 | IOA-OAA-NaSS | 87:12:1 | C | 0.8 |

*Comparative Example

| | | | | |
|---|---|---|---|---|
| *21 | IOA-OAA-NaSS | 87:12:1 | C | 1.0 |
| *22 | IOA-OAA-NaSS | 87:12:1 | C | 1.2 |
| *23 | IOA-OAA-NaSS | 87:12:1 | C | 1.4 |
| *24 | IOA-OAA-NaSS | 87:12:1 | C | 1.6 |
| 25 | IOA-OAA-NaSS | 87:12:1 | D | 0.2 |
| 26 | IOA-OAA-NaSS | 87:12:1 | D | 0.4 |
| 27 | IOA-OAA-NaSS | 87:12:1 | D | 0.6 |
| 28 | IOA-OAA-NaSS | 87:12:1 | D | 0.8 |
| 29 | IOA-OAA-NaSS | 87:12:1 | D | 1.0 |
| 30 | IOA-OAA-NaSS | 87:12:1 | D | 1.2 |
| 31 | IOA-OAA-NaSS | 87:12:1 | D | 1.4 |
| 32 | IOA-OAA-NaSS | 87:12:1 | D | 1.6 |
| 33 | IOA-OAA-NaSS | 87:12:1 | E | 1.0 |
| 34 | IOA-OAA-NaSS | 87:12:1 | E | 2.0 |
| 35 | IOA-OAA-NaSS | 87:12:1 | E | 3.0 |
| 36 | IOA-OAA-NaSS | 87:12:1 | E | 4.0 |
| 37 | IOA-OAA-NaSS | 87.6:12:0.4 | E | 1.0 |
| 38 | IOA-OAA-NaSS | 87.6:12:0.4 | E | 2.0 |
| 39 | IOA-OAA-NaSS | 87.6:12:0.4 | E | 3.0 |
| 40 | IOA-OAA-NaSS | 87.6:12:0.4 | E | 4.0 |
| 41 | IOA-OAA-NaSS | 87:12:1 | D | 1.0 |
| 42 | IOA-OAA-NaSS | 87:12:1 | D | 2.0 |
| 43 | IOA-OAA-NaSS | 87:12:1 | D | 3.0 |
| 44 | IOA-OAA-NaSS | 87:12:1 | D | 4.0 |
| 45 | IOA-OAA-NaSS | 87.6:12:0.4 | D | 1.0 |
| 46 | IOA-OAA-NaSS | 87.6:12:0.4 | D | 2.0 |
| 47 | IOA-OAA-NaSS | 87.6:12:0.4 | D | 3.0 |
| 48 | IOA-OAA-NaSS | 87.6:12:0.4 | D | 4.0 |

*Comparative Example

PSA tapes numbered 1-24 and marked with an asterisk are outside the scope of the invention and are included for comparative purposes.

Table I

| PSA Tape | Peel Adhesion (N/dm) | Quick Dry Test (% Water Loss) | Curved Panel Lifting Test at 150°C 50J (cm) | BC/CC (cm) |
|---|---|---|---|---|
| * 1 | 43 | 67.9 | 2.5 | 3.8 |
| * 2 | 50 | 64.4 | 3.8 | 5.1 |
| * 3 | 48 | 62.2 | 1.3 | 1.9 |
| * 4 | 51 | 63.6 | 0.6 | 1.9 |
| * 5 | 51 | 63.2 | 0.6 | 1.3 |
| * 6 | 52 | 62.7 | 3.8 | 3.8 |
| * 7 | 51 | 63.7 | 3.8 | 3.8 |
| * 8 | 50 | 64.3 | 1.3 | 1.3 |
| * 9 | 44 | 72.6 | 2.5 | 1.3 |
| *10 | 41 | 70.9 | 0.6 | 0.6 |
| *11 | 46 | 73.7 | 2.5 | 1.3 |
| *12 | 46 | 69.5 | 2.5 | 0.6 |
| *13 | 51 | 68.9 | 0 | 0 |
| *14 | 49 | 65.8 | 0 | 0.6 |
| *15 | 49 | 65.1 | 1.9 | 0.6 |
| *16 | 50 | 65.0 | 1.3 | 0.6 |
| *17 | 40 | 59.5 | 0.6 | 1.9 |
| *18 | 43 | 60.8 | 4.4 | 2.5 |
| *19 | 44 | 59.2 | 5.1 | 4.4 |
| *20 | 43 | 63.0 | 3.8 | 3.8 |
| *21 | 46 | 66.8 | 1.3 | 1.3 |
| *22 | 44 | 70.0 | 0.6 | 1.9 |
| *23 | 45 | 74.1 | 1.3 | 3.8 |
| *24 | 44 | 74.8 | 1.9 | 1.9 |
| 25 | 42 | 68.1 | 5.1 | 1.3 |
| 26 | 44 | 71.4 | 3.8 | 3.8 |
| 27 | 45 | 76.5 | 1.3 | 0.6 |
| 28 | 47 | 80.8 | 0.6 | 0 |
| 29 | 48 | 83.4 | 0 | 0 |
| 30 | 48 | 87.7 | 0 | 0 |
| 31 | 49 | 87.8 | 0 | 0 |

*Comparative Example

| | | | | |
|---|---|---|---|---|
| 32 | 51 | 90.5 | 0 | 0 |
| 33 | 42 | 84.1 | 0 | 0 |
| 34 | 43 | 89.8 | 0 | 0 |
| 35 | 45 | 91.6 | 0 | 0 |
| 36 | 46 | 92.2 | 0 | 0 |
| 37 | 44 | 92.0 | 0 | 0 |
| 38 | 49 | 97.6 | 0 | 0 |
| 39 | 49 | 94.9 | 0 | 0 |
| 40 | 50 | 96.1 | 0 | 0 |
| 41 | 44 | 81.4 | 0 | 0 |
| 42 | 47 | 87.5 | 0 | 0 |
| 43 | 49 | 90.8 | 0 | 0 |
| 44 | 52 | 90.0 | 0 | 0 |
| 45 | 52 | 92.7 | 0 | 0 |
| 46 | 54 | 94.3 | 0 | 0 |
| 47 | 55 | 94.5 | 0 | 0 |
| 48 | 55 | 94.9 | 0 | 0 |

* Comparative Example

Again, PSA tapes 1-24 are outside the scope of the invention and are for comparative purposes. As can be seen from the above table, PSA tapes (within the invention) showed improved peel resistance. Each of PSA Tapes 1-48 left no residue after the Curved Panel Lifting Test at 150 °C.

PSA Tapes 49-61

A split-resin flask of 5000-ml capacity was fitted with a variable speed agitator, condensor, purging tube for introducing nitrogen, and a recording temperature controller. The following components were added to the flask while purging the flask with nitrogen. A solution of 243.3 g n-octylacrylamide in 1698.9 g of isooctylacrylate was charged to the flask. A solution of 5.86 g of sodium dodecyl benzene sulfonate in 1463.50 g of deionized water was next charged to the flask. While stirring, the temperature was raised to 50 °C. A solution of 19.53 g sodium styrene sulfonate and 2.34 g of sodium bicarbonate in 200 g of deionized water was next charged to the flask. Then a first initiator charge of 1.2 g potassium persulfate and 0.4 g sodium metabisulfite was added. Polymerization started in about 1/2 hour. The temperature was held at 50 °C by heating and cooling as required during polymerization. Eight ml of a 5% aqueous solution of sodium metabisulfite was added 5 hours after the first initiator charge, and 12 ml of a 5% aqueous solution of sodium meta-bisulfite and 12 ml of a 5% aqueous solution of potassium persulfate were added 7 hours after the first initiator charge. The emulsion was heated another 9 hours to complete the polymerization. Monomer ratio = 87:12:1.

This emulsion was coated onto a paper backing as described in the Curved Panel Lifting Test at 150 °C to provide PSA Tape 49 for which Test Results are reported in Table II along with results of testing PSA Tapes 50-61 which differ from PSA Tape 49 as indicated in Table II.

Table II

| PSA Tape | External Emulsifier | | Quick Dry Test (% Water Loss) | Peel Adhesion (N/dm) | Curved Panel Lifting Test at 150°C | |
|---|---|---|---|---|---|---|
| | Type | Level(phr) | | | 50J (cm) | CC/BC (cm) |
| *49 | None | - | 83.0 | 42 | 5.6 | 8.4 |
| *50 | A | 1 | 91.3 | 34 | 1.9 | 0 |
| *51 | A | 2 | 94.4 | 24 | 0 | 0 |
| *52 | A | 3 | 93.2 | 25 | 0 | 0 |
| *53 | B | 1 | 80.0 | 39 | 0 | 0.3 |
| *54 | B | 2 | 82.8 | 35 | 0.8 | 0 |
| *55 | B | 3 | 82.8 | 34 | 1.0 | 0 |
| *56 | C | 1 | 94.9 | 33 | 3.2 | 1.4 |
| *57 | C | 2 | 94.0 | 21 | 5.4 | 1.0 |
| *58 | C | 3 | 95.3 | 20 | 0 | 2.2 |
| 59 | F | 1 | 90.7 | 36 | 0 | 0 |
| 60 | F | 2 | 95.3 | 37 | 0 | 0 |
| 61 | F | 3 | 95.8 | 35 | 0 | 0 |

*Comparative Example

PSA Tapes 49-58, and marked with an asterisk are included for comparative purposes.

After being stripped off following the Curved Panel Lifting Test at 150°C, adhesive residue was observed on the panels from PSA Tapes 50, 51, 52, 55, and 58. The other tapes left no residue.

PSA Tapes 62-65

An emulsion was prepared in the same manner as that used in making PSA Tape 49 except the amounts of the following components were changed as follows:

| | Grams |
|---|---|
| isooctylacrylate | 1691.59 |
| n-octylacrylamide | 204.19 |
| sodium styrene sulfonate | 9.76 |
| sodium bicarbonate | 4.88 |
| sodium dodecyl benzene sulfonate | 9.76 |

Monomer ratio = 87.5:12:0.5.

This emulsion was coated onto a paper backing as described in the Curved Panel Lifting Test at 150°C to provide PSA Tape 62 for which test results are reported in Table III along with results of testing PSA Tapes 63-65 which differ from PSA Tape 62 as indicated in Table III.

Table III

| PSA Tape | External Emulsifier | | Quick Dry Test (% Water Loss) | Peel Adhesion (N/dm) | Curved Panel Lifting Test at 150°C | |
|---|---|---|---|---|---|---|
| | Type | Level(phr) | | | 50J (cm) | CC/BC (cm) |
| *62 | None | - | 71.7 | 48 | 0 | 0 |
| 63 | D | 0.5 | 89.0 | 48 | 0 | 0 |
| 64 | D | 1 | 94.2 | 46 | 0 | 0 |
| 65 | D | 2 | 97.0 | 40 | 0 | 0 |

*Comparative Example

Each of PSA Tapes 62-65 left no residue after the Curved Panel Lifting Test at 150 °C.

PSA Tapes 66-69

To 76.26 g of the coatable emulsion used in making PSA Tape 49 was slowly added 0.77 g of triethanolamine with mild stirring. To this mixture was slowly added 19.14 gm of "Foral" 85 tackifier resin dispersion (a highly stabilized ester rosin commercially available from Hercules, having a softening point of 80 °C, an acid number of 9, and a specific gravity of 1.07) with stirring. To this tackified formulation were added various levels of External Emulsifier E followed by coating onto paper backings. Test results are in Table IV.

Table IV

| PSA Tape | External Emulsifier | | Quick Dry Test (%Water Loss) | Peel Adhesion (N/dm) | Curved Panel Lifting Test at 150 °C | |
|---|---|---|---|---|---|---|
| | Type | Level(phr) | | | 50J (cm) | CC/BC (cm) |
| *66 | None | 0 | 81.7 | 53 | 0 | 0 |
| 67 | E | 1 | 95.9 | 55 | 0 | 0 |
| 68 | E | 2 | 96.4 | 53 | 0 | 0 |
| 69 | E | 3 | 97.0 | 56 | 0 | 0 |

*Comparative Example

After being stripped off following the Curved Panel Lifting Test at 150 °C, each of PSA Tapes 66-69 left a barely noticeable adhesive residue. When a new set of tapes identical to PSA Tape 66-69 was tested, none of the tapes left any observable adhesive residue.

PSA Tapes 70-93

The following polymers were prepared according to the procedure described on page 10 except the solids level was raised to 50% and the level of potassium persulfate ($k_2S_2O_8$) was increased to 0.38 gm.

| PSA Tape | Monomers | Ratio | External Emulsifier | |
|---|---|---|---|---|
| | | | Type | Level (phr) |
| 70 | I0A-OAA-NaSS | 87:12:1 | E | 1 |
| 71 | I0A-OAA-NaSS | 87:12:1 | E | 2 |
| 72 | I0A-OAA-NaSS | 87:12:1 | E | 3 |
| 73 | I0A-OAA-NaSS | 87:12:1 | E | 4 |
| 74 | I0A-OAA-NaSS | 87:12:1 | F | 1 |
| 75 | I0A-OAA-NaSS | 87:12:1 | F | 2 |
| 76 | I0A-OAA-NaSS | 87:12:1 | F | 3 |
| 77 | I0A-OAA-NaSS | 87:12:1 | F | 4 |
| 78 | I0A-OAA-NaSS | 87:12:1 | G | 1 |
| 79 | I0A-OAA-NaSS | 87:12:1 | G | 2 |
| 80 | I0A-OAA-NaSS | 87:12:1 | G | 3 |
| 81 | I0A-OAA-NaSS | 87:12:1 | G | 4 |
| *82 | I0A-OAA-NaSS | 87:12:1 | H | 1 |
| *83 | I0A-OAA-NaSS | 87:12:1 | H | 2 |
| *84 | I0A-OAA-NaSS | 87:12:1 | H | 3 |
| *85 | I0A-OAA-NaSS | 87:12:1 | H | 4 |
| 86 | I0A-OAA-NaSS | 87:12:1 | I | 1 |
| 87 | I0A-OAA-NaSS | 87:12:1 | I | 2 |
| 88 | I0A-OAA-NaSS | 87:12:1 | I | 3 |
| 89 | I0A-OAA-NaSS | 87:12:1 | I | 4 |
| *90 | I0A-OAA-NaSS | 87:12:1 | J | 1 |
| *91 | I0A-OAA-NaSS | 87:12:1 | J | 2 |
| *92 | I0A-OAA-NaSS | 87:12:1 | J | 3 |
| *93 | I0A-OAA-NaSS | 87:12:1 | J | 4 |

*Comparative Example

| PSA Tape | Peel Adhesion (N/dm) | Quick Dry Test (% Water Loss) | Curved Panel Lifting Test at 150 ° C | |
|---|---|---|---|---|
| | | | 50J (cm) | BC/CC (cm) |
| 70 | 46 | 84.1 | PASS | PASS |
| 71 | 47 | 89.8 | PASS | PASS |
| 72 | 50 | 91.6 | PASS | PASS |
| 73 | 51 | 92.2 | PASS | PASS |
| 74 | 52 | 78.7 | 1.3 | 1.3 |
| 75 | 56 | 85.6 | 1.9 | 0.6 |
| 76 | 57 | 90.5 | PASS | 0.6 |
| 77 | 57 | 91.2 | PASS | 0.6 |
| 78 | 47 | 63.5 | 1.9 | 1.3 |
| 79 | 46 | 72.0 | PASS | PASS |
| 80 | 45 | 77.2 | PASS | PASS |
| 81 | 44 | 82.4 | PASS | PASS |
| *82 | 25 | 48.0 | 0.6 | 5.1 |
| *83 | 21 | 49.6 | PASS | 2.5 |
| *84 | 24 | 54.9 | PASS | 1.9 |
| *85 | 28 | 72.9 | PASS | 3.8 |
| 86 | 44 | 61.0 | PASS | 0.6 |
| 87 | 42 | 74.3 | PASS | PASS |
| 88 | 40 | 82.5 | PASS | PASS |
| 89 | 36 | 87.1 | PASS | PASS |
| *90 | 22 | 53.9 | 1.9 | 1.4 |
| *91 | 21 | 83.9 | 0.6 | 0.6 |
| *92 | 8 | 90.7 | PASS | PASS |
| *93 | 7 | 92.6 | PASS | PASS |

*Comparative Example

PSA Tapes 94-125

The following latices were prepared according to the procedure described on page 10 except that the following different ionomers were substituted for sodium styrene sulfonate.

SPMK = Potassium salt of sulfopropylmethacrylate
AMPSNa = Sodium salt of 2-acrylamido-2-methylpropyl sulfonic acid
SEMNa = Sodium salt of sulfoethylmethacrylate
SPIK = Bis-(3-sulfopropyl)-itaconic acid ester, di-potassium salt

SPMK = 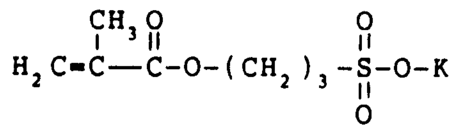

AMPSNa = 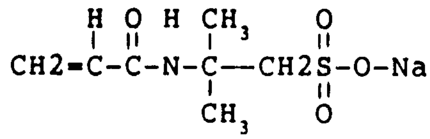

SEMNa = 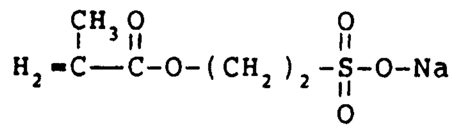

SPIK = 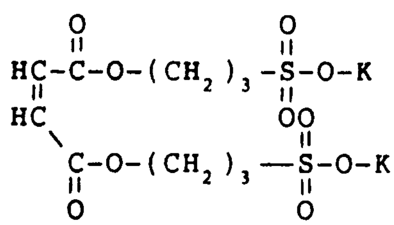

| PSA Tape | Monomers | Ratio | External Emulsifier | |
|---|---|---|---|---|
| | | | Type | Level (phr) |
| 94 | IOA-OAA-SPMK | 87:12:1 | D | 0.2 |
| 95 | IOA-OAA-SPMK | 87:12:1 | D | 0.4 |
| 96 | IOA-OAA-SPMK | 87:12:1 | D | 0.6 |
| 97 | IOA-OAA-SPMK | 87:12:1 | D | 0.8 |
| 98 | IOA-OAA-SPMK | 87:12:1 | D | 1.0 |
| 99 | IOA-OAA-SPMK | 87:12:1 | D | 1.2 |
| 100 | IOA-OAA-SPMK | 87:12:1 | D | 1.4 |
| 101 | IOA-OAA-SPMK | 87:12:1 | D | 1.6 |
| 102 | IOA-OAA-AMPSNa | 87:12:1 | D | 0.2 |
| 103 | IOA-OAA-AMPSNa | 87:12:1 | D | 0.4 |
| 104 | IOA-OAA-AMPSNa | 87:12:1 | D | 0.6 |
| 105 | IOA-OAA-AMPSNa | 87:12:1 | D | 0.8 |
| 106 | IOA-OAA-AMPSNa | 87:12:1 | D | 1.0 |
| 107 | IOA-OAA-AMPSNa | 87:12:1 | D | 1.2 |
| 108 | IOA-OAA-AMPSNa | 87:12:1 | D | 1.4 |
| 109 | IOA-OAA-AMPSNa | 87:12:1 | D | 1.6 |
| 110 | IOA-OAA-SEMNa | 87:12:1 | D | 0.2 |
| 111 | IOA-OAA-SEMNa | 87:12:1 | D | 0.4 |
| 112 | IOA-OAA-SEMNa | 87:12:1 | D | 0.6 |
| 113 | IOA-OAA-SEMNa | 87:12:1 | D | 0.8 |
| 114 | IOA-OAA-SEMNa | 87:12:1 | D | 1.0 |
| 115 | IOA-OAA-SEMNa | 87:12:1 | D | 1.2 |
| 116 | IOA-OAA-SEMNa | 87:12:1 | D | 1.4 |
| 117 | IOA-OAA-SEMNa | 87:12:1 | D | 1.6 |
| 118 | IOA-OAA-SPIK | 87:12:1 | D | 0.2 |
| 119 | IOA-OAA-SPIK | 87:12:1 | D | 0.4 |
| 120 | IOA-OAA-SPIK | 87:12:1 | D | 0.6 |
| 121 | IOA-OAA-SPIK | 87:12:1 | D | 0.8 |
| 122 | IOA-OAA-SPIK | 87:12:1 | D | 1.0 |
| 123 | IOA-OAA-SPIK | 87:12:1 | D | 1.2 |
| 124 | IOA-OAA-SPIK | 87:12:1 | D | 1.4 |
| 125 | IOA-OAA-SPIK | 87:12:1 | D | 1.6 |

| PSA Tape | Peel Adhesion (N/dm) | Quick Dry Test (% Water Loss) | Curved Panel Lifting Test at 150°C | |
|---|---|---|---|---|
| | | | 50J (cm) | BC/CC (cm) |
| 94 | 50 | 73.3 | [R]PASS | [R]PASS |
| 95 | 52 | 80.7 | PASS | PASS |
| 96 | 53 | 80.5 | PASS | PASS |
| 97 | 53 | 81.3 | PASS | PASS |
| 98 | 54 | 80.2 | PASS | PASS |
| 99 | 55 | 84.6 | PASS | PASS |
| 100 | 55 | 84.6 | PASS | PASS |
| 101 | 53 | 88.2 | PASS | PASS |
| 102 | 53 | 83.3 | PASS | [R]PASS |
| 103 | 53 | 89.8 | PASS | [R]PASS |
| 104 | 57 | 93.1 | PASS | PASS |
| 105 | 56 | 92.1 | PASS | PASS |
| 106 | 55 | 86.0 | PASS | PASS |
| 107 | 61 | 93.2 | PASS | PASS |
| 108 | 58 | 91.3 | PASS | PASS |
| 109 | 58 | 95.4 | PASS | PASS |
| 110 | 52 | 75.9 | [R]PASS | PASS |
| 111 | 54 | 79.5 | [R]PASS | PASS |
| 112 | 56 | 84.1 | [R]PASS | PASS |
| 113 | 56 | 86.5 | PASS | PASS |
| 114 | 56 | 87.0 | PASS | PASS |
| 115 | 56 | 90.6 | PASS | PASS |
| 116 | 56 | 91.8 | PASS | PASS |
| 117 | 57 | 94.0 | PASS | PASS |
| 118 | 47 | 66.3 | PASS | [R]PASS |
| 119 | 47 | 85.7 | PASS | [R]PASS |
| 120 | 51 | 92.9 | PASS | PASS |
| 121 | 45 | 93.2 | PASS | PASS |
| 122 | 48 | 96.3 | PASS | PASS |
| 123 | 48 | 96.4 | PASS | PASS |
| 124 | 48 | 96.2 | PASS | PASS |
| 125 | 51 | 97.1 | PASS | PASS |

After being stripped off following the Curved Panel Lifting Test at 150°C, adhesive residue was observed on the panels from PSA Tapes 94, 102, 103, 110, 111, 112, 118, and 119. The other tapes left no residue.

**Claims**

**1.** A pressure-sensitive adhesive which comprises a copolymer of monomers comprising

(a) from 95 to 99.9 parts by weight of at least one terminally unsaturated vinyl monomer, 60 to 100 weight percent of said vinyl monomer being selected from the class of nontertiary alkyl acrylates wherein each alkyl group has at least half of its carbon atoms in a single chain and the average length of the alkyl chain is at least 4 and not more than 12, and

(b) from 0.1 to 5 parts by weight of at least one vinyl-unsaturated, homopolymerizable emulsifier monomer which is a surfactant having both a hydrophobic and a hydrophilic moiety, contains at least 5 but not more than 40 carbon atoms, and is water-dispersible, the total parts by weight of (a) plus (b) being 100,

wherein the improvement comprises:

from 0.2 part to 4.0 parts by weight of the adhesive comprises phosphate emulsifier selected from at least one of

(i) a polyoxyethylene phosphate emulsifier, and

(ii) a salt of a polyoxyethylene phosphate emulsifier,

whereby said adhesive provides faster drying than adhesives that are identical except for the use of said phosphate emulsifier.

2. A pressure-sensitive adhesive as defined in claim 1 wherein the phosphate emulsifier has the formula:

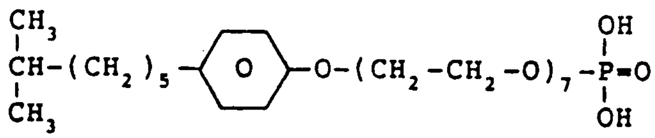

3. A pressure-sensitive adhesive as defined in claim 1 wherein the phosphate emulsifier has the formula:

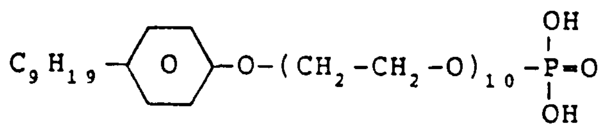

4. A pressure-sensitive adhesive as defined in claim 1 wherein the phosphate emulsifier has the formula:

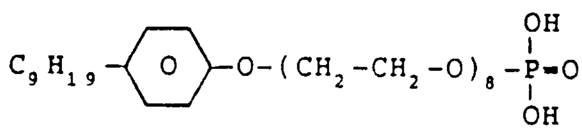

5. Pressure-sensitive adhesive tape having a backing carrying a layer of pressure-sensitive adhesive as defined in claim 1, 2, 3, 4 or 5.

6. Pressure-sensitive adhesive tape as claimed in claim 5 wherein said backing is a paper backing.

7. A pressure-sensitive adhesive tape as claimed in any preceding claim having a peel adhesion value (measured by removing a test strip 25.4 mm wide from a glass plate, at an angle of 180° from the glass plate and at a speed of 28 mm/s as defined herein) of at least 35 N/dm.

8. Method of making a pressure-sensitive adhesive of claim 1 comprising the steps of
(1) forming an aqueous dispersion of
(a) from 95 to 99.9 parts by weight of at least one terminally unsaturated vinyl monomer as defined in claim 1 sub-para (a),
(b) from 0.1 to 5 parts by weight of at least one vinyl-unsaturated, homopolymerisable emulsifier monomer as defined in claim 1 sub-para (b), the total parts by weight of (a) plus (b) being 100, and
(c) phosphate emulsifier comprising at least 0.2 part by weight of the adhesive layer, said phosphate emulsifier being as defined in any of claims 1 to 4; and
(2) copolymerising monomers (a) and (b).

## Patentansprüche

1. Ablösbarer Kleber mit einem Copolymer von Monomeren, umfassend:
(a) Zwischen 95 und 99,9 Gewichtsanteile von mindestens einem endständig ungesättigten Vinylmonomer, wobei 60 bis 100 Gew. % dieses Vinylmonomers aus der Klasse nichttertiärer Alkylacrylate ausgewählt werden, wobei jede Alkylgruppe mindestens die Hälfte seiner Kohlenstoffatome in einer einzelnen Kette hat und die mittlere Länge der Alkylkette mindestens 4 und nicht mehr als 12 beträgt und

(b) zwischen 0,1 und 5 Gewichtsanteile von mindestens einem vinyl-ungesättigten homopolymerisierbaren Emulgatormonomers, daß ein oberflächenaktives Mittel sowohl mit einer hydrophoben als auch mit einer hydrophilen Komponente ist, mindestens 5 jedoch nicht mehr als 40 Kohlenstoffatome enthält und in Wasser dispergierbar ist, wobei die Gesamtgewichtsanteile von (a) plus (b) 100 betragen,

wobei die Verbesserung umfaßt:

Zwischen 0,2 und 4,0 Gewichtsanteile des Klebers umfassen Phosphat-Emulgiermittel, die mindestens ausgewählt werden aus einem der beiden

(i) Polyoxyethylenphosphat-Emulgiermittel und

(ii) Salz eines Polyoxyethylenphospaht-Emulgiermittels,

wodurch der genannte Kleber ein schnelleres Trocknen gewährt als Kleber, die mit Ausnahme der Verwendung des genannten Phosphat-Emulgiermittels identisch sind.

**2.** Haftkleber nach Anspruch 1, bei welchem das Phosphat-Emulgiermittel die Formel hat:

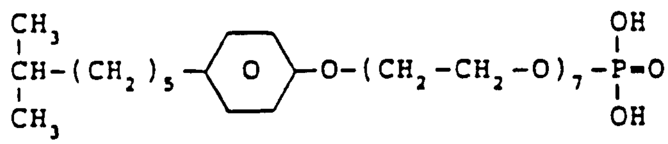

**3.** Haftkleber nach Anspruch 1, bei welchem das Phosphat-Emulgiermittel die Formel hat:

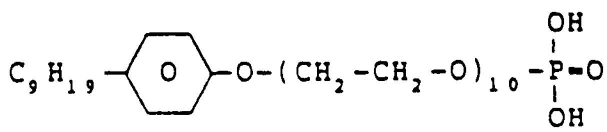

**4.** Haftkleber nach Anspruch 1, bei welchem das Phosphat-Emulgiermittel die Formel hat:

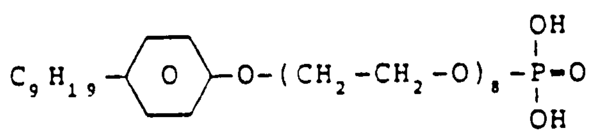

**5.** Haftklebeband mit einem Träger, der eine Schicht Haftkleber entsprechend Anspruch 1, 2, 3, 4 oder 5 hat.

**6.** Haftklebeband nach Anspruch 5, bei welchem der Träger ein Papierträger ist.

**7.** Haftklebeband nach jedem der vorgenannten Ansprüche mit einem Wert für die Ablösefestigkeit (wird gemessen durch Ablösen eines Teststreifens von 25,4 mm Breite von einer Glasplatte in einem Winkel von 180° zur Glasplatte und bei einer Geschwindigkeit von 28 mm/s, wie hierin festgelegt wurde) von mindestens 35 N/dm.

**8.** Verfahren zur Herstellung eines Haftklebers nach Anspruch 1, umfassend die Schritte:

(1) Herstellung einer wässrigen Dispersion von

(a) zwischen 95 und 99,9 Gewichtsanteilen von mindestens einem endständigen ungesättigten Vinylmonomer entsprechend Anspruch 1, Abschnitt (a),

(b) zwischen 0,1 und 5 Gewichtsanteilen von mindestens einem vinyl-ungesättigten, homopolymerisierbaren Emulgatormonomer entsprechend Anspruch 1, Abschnitt (b), wobei die Summe der Gewichtsanteile von (a) plus (b) 100 beträgt und

(c) Phosphat-Emulgiermittel, umfassend mindestens 0,2 Gewichtsanteile der Kleberschicht, wobei das genannte Phosphat-Emulgiermittel wie in einem der Ansprüche 1 bis 4 festgelegt ist; und

(2) Copolymerisieren der Monomere (a) und (b).

## Revendications

**1.** Adhésif sensible à la pression, qui comprend un copolymère de monomères comprenant :

(a) de 95 à 99,9 parties en poids d'au moins un monomère vinylique à insaturation terminale, 60 à 100 % en poids dudit monomère vinylique étant choisis parmi l'ensemble comprenant les acrylates d'alkyle non tertiaire dont chaque groupe alkyle possède au moins la moitié de ses atomes de carbone dans une chaîne unique, la longueur moyenne de la chaîne alkyle étant d'au moins 4 et non supérieure à 12, et

(b) de 0,1 à 5 parties en poids d'au moins un monomère émulsifiant homopolymérisable à insaturation vinylique, qui est un tensioactif ayant tant un fragment hydrophobe qu'un fragment hydrophile, contient au moins 5 atomes de carbone mais pas plus de 40, et est dispersible dans l'eau, la somme des parties en poids de (a) et de (b) étant égale à 100,

le perfectionnement résidant dans le fait que l'adhésif contient de 0,2 partie à 4,0 parties en poids d'un émulsifiant phosphate, qui est au moins un émulsifiant choisi parmi l'ensemble comprenant :

(i) un émulsifiant phosphate polyoxyéthyléné, et

(ii) un sel d'un émulsifiant phosphate polyoxyéthyléné,

ledit adhésif assurant un séchage plus rapide que les adhésifs qui lui sont identiques, sauf pour ce qui est de l'utilisation dudit émulsifiant phosphate.

**2.** Adhésif sensible à la pression selon la revendication 1, dans lequel l'émulsifiant phosphate a la formule :

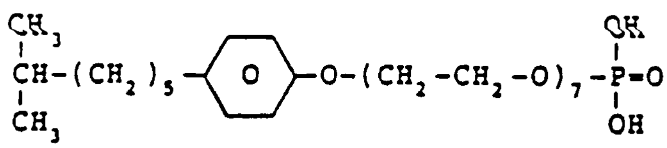

**3.** Adhésif sensible à la pression selon la revendication 1, dans lequel l'émulsifiant phosphate a la formule :

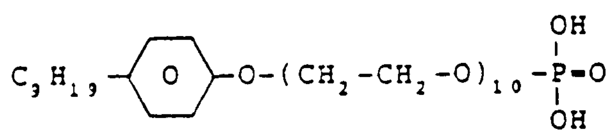

**4.** Adhésif sensible à la pression selon la revendication 1, dans lequel l'émulsifiant phosphate a la formule :

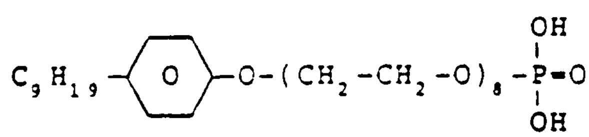

**5.** Ruban adhésif sensible à la pression, comportant un support portant une couche d'un adhésif sensible à la pression selon l'une des revendications 1, 2, 3, 4 ou 5.

**6.** Ruban adhésif sensible à la pression selon la revendication 5, dans lequel ledit support est un support en papier.

**7.** Ruban adhésif sensible à la pression selon l'une quelconque des revendications précédentes, ayant une résistance au pelage (mesurée par enlèvement, à partir d'une plaque de verre, d'une bande d'essai de 25,4 mm de largeur, selon un angle de 180° par rapport à la plaque de verre et à une vitesse de 28 mm/s, comme défini dans l'invention) d'au moins 35 N/dm.

**8.** Procédé de fabrication d'un adhésif sensible à la pression selon la revendication 1, qui comprend les étapes consistant :

(1) à former une dispersion aqueuse

(a) de 95 à 99,9 parties en poids d'au moins un monomère vinylique à insaturation terminale telle que définie dans la revendication 1, alinéa (a),

(b) de 0,1 à 5 parties en poids d'au moins un monomère émulsifiant homopolymérisable à insaturation vinylique tel que défini dans la revendication 1, alinéa (b), la somme des parties en poids de (a) et de (b) étant égale à 100, et

(c) d'un émulsifiant phosphate comptant pour au moins 0,2 partie en poids de la couche adhésive, ledit émulsifiant phosphate étant tel que défini dans l'une quelconque des revendications 1 à 4 ; et

(2) à copolymériser les monomères (a) et (b).